# EUROPEAN PATENT APPLICATION

(11) **EP 4 838 369 A1**
(43) Date of publication of application: **11.11.2026**
(21) Application number: 26175808.0
(22) Date of filing: 30.04.2026
(51) Int. Cl.: G06F 12/02, G06F 3/06, G06F 12/0868

(54) **SYSTEMS AND METHODS FOR DEVICE-MANAGED MEMORY-TIERING**

(30) Priority: 06.05.2025 US 202563800948 P; 29.01.2026 US 202619464543
(71) Applicant: Samsung Electronics Co., Ltd., Suwon-si, Gyeonggi-do 16677 (KR)
(72) Inventor: CHOI, Byung, San Jose, CA 95134 (US); PATEL, Ankit Maheshbhai, San Jose, CA 95134 (US); TAVALLAEI, Siamak, San Jose, CA 95134 (US); JO, Myung Hyun, San Jose, CA 95134 (US)
(74) Representative: Kuhnen & Wacker Patent- und Rechtsanwaltsbüro PartG mbB

(57) **Abstract**

Systems and methods for device-managed memory-tiering are disclosed. The method comprises: determining, by a processor, that access associated with a first memory address is below a minimum threshold; based on determining that the access is below the minimum threshold, storing, by the processor, data associated with the first memory address from a first memory (202) to a second memory (204), the first memory (202) being associated with a first tier of a memory hierarchy, and the second memory (204) being associated with a second tier of the memory hierarchy, wherein the first tier and the second tier each correspond to a different access latency; transmitting, by the processor, a notification to a computing device (100) based on storing of the data from the first memory (202) to the second memory(204), wherein the computing device (100) is configured to take an action with respect to the first memory address in response to receiving the notification. A memory device coupled to a computing device (100) may comprise: a first memory (202) associated with a first tier of a memory hierarchy; a second memory (204) associated with a second tier of the memory hierarchy, wherein the first tier and the second tier each correspond to a different access latency; and a processor coupled to the first memory (202) and the second memory (204), wherein the processor is configured to execute instructions that cause the processor to carry out the method.

## Description

### FIELD

One or more aspects of embodiments according to the present disclosure relate to memory devices, and more particularly to device-managed memory-tiering.

### BACKGROUND

Applications such as artificial intelligence (Al) may perform computations on large amounts of data. As such types of computations increase, it may be desirable to employ efficient and cost-effective solutions for performing the computations.

The above information disclosed in this Background section is only for enhancement of understanding of the background of the present disclosure, and therefore, it may contain information that does not form prior art.

### SUMMARY

Embodiments of the present disclosure are directed to a memory device coupled to a computing device. The memory device includes: a first memory associated with a first tier of a memory hierarchy; a second memory associated with a second tier of the memory hierarchy, wherein the first tier and the second tier each correspond to a different access latency; and a processor coupled to the first memory and the second memory, wherein the processor is configured to execute instructions that cause the processor to: determine that access associated with a first memory address is below a minimum threshold; based on determination that the access is below the minimum threshold, store data associated with the first memory address from the first memory to the second memory; and transmit a notification to the computing device based on storing of the data from the first memory to the second memory, wherein the computing device is configured to take an action with respect to the first memory address in response to receiving the notification.

In some embodiments, the instructions further cause the processor to monitor a frequency of access requests for the first memory address from the computing device.

In some embodiments, the minimum threshold is configured by the computing device.

In some embodiments, the instructions that cause the processor to store data associated with the first memory address from the first memory to the second memory include instructions that cause the processor to detect a threshold level of fullness of the first memory.

In some embodiments, the instructions that cause the processor to store data associated with the first memory address from the first memory to the second memory include instructions that cause the processor to detect a request from the computing device for moving the first memory address.

In some embodiments, the notification identifies the first memory address stored from the first memory to the second memory.

In some embodiments, the action includes modification of an entry of a page table in the computing device associated with the first memory address for indicating absence of the data at the memory address of the first memory.

In some embodiments, the action includes transmitting a prefetch request to move the data into the first memory address.

In some embodiments, the instructions further cause the processor to: monitor a second access associated with a second memory address; based on monitoring the second access, transmit a request to the computing device for moving second data into or out of the second memory address; based on the request, receive identification of a third memory address from the computing device; and based on the identification of the third memory address, move third data into or out of the third memory address identified by the computing device.

In some embodiments, the instructions further cause the processor to: monitor a second access associated with a second memory address stored in the second memory; determine that the second access is above the minimum threshold and below a maximum threshold; based on determining that the second access is above the minimum threshold and below the maximum threshold, store second data from the second memory address to the first memory.

One or more embodiments of the present disclosure are directed to a method that includes: determining, by a processor, that access associated with a first memory address is below a minimum threshold; based on determining that the access is below the minimum threshold, storing, by the processor, data associated with the first memory address from a first memory to a second memory, the first memory being associated with a first tier of a memory hierarchy, and the second memory being associated with a second tier of the memory hierarchy, wherein the first tier and the second tier each correspond to a different access latency; transmitting, by the processor, a notification to a computing device based on storing of the data from the first memory to the second memory, wherein the computing device is configured to take an action with respect to the first memory address in response to receiving the notification.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a memory system configured for device-managed memory-tiering according to one or more embodiments;
FIG. 2 depicts a block diagram of the memory device 102 according to one or more embodiments;
FIG. 3 depicts a conceptual flow diagram of page demotion and promotion between memory tiers of a memory hierarchy, and between device managed sub-tiers of a memory device, according to one or more embodiments;
FIG. 4 depicts an example page table according to one or more embodiments;
FIG. 5 depicts a conceptual layout diagram of a page LRU and an associated page time table according to one or more embodiments;
FIG. 6 depicts a flow diagram of a process for device-managed memory-tiering according to one or more embodiments; and
FIG. 7 depicts another flow diagram of a process for device-managed memory-tiering according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

Al workload acceleration may employ memory and storage semantic operations for model training and inference processes. It may be useful to manage the memory devices to ensure that the performance requirements of the Al workloads are met while balancing the cost of ownership of such memory devices. For example, a storage medium (e.g., a dynamic random access memory (DRAM)) that is attached to a central computing unit (CPU) of a host computing device (e.g., host) may have lower data access latencies and power consumption than an attached memory device (e.g., a Compute Express Link (CXL) memory) (referred to as an "attached memory" or "memory device") that is attached over a data communications link. Fast memory (e.g., host-attached DRAM), however, may be more expensive and provide limited memory capacities than slower memory (e.g., CXL memory).

In order to minimize a total cost of ownership (TCO) of memory for Al workload acceleration, it may be desirable to have a memory or storage system with different types of memory (e.g., a combination of DRAM and CXL memory) that are arranged in a memory hierarchy or tier, where the tier assigned to a storage medium may be based on a characteristic (e.g., latency) of the storage medium. Taking latency as an example, the tier level or number assigned to the storage medium may increase as the latency associated with the medium increase. In this regard, latency may increase as data is moved (e.g., vertically) from a lower tier number to a higher tier number.

The integration of an attached memory device to the memory hierarchy, however, may present challenges that may contribute to a relatively high TCO. The challenges may stem, for example, from the inherent differences in the characteristics of DRAM and attached memories which, when not properly managed, may lead to inefficiencies in data handling, poor data access latency management, increased power consumption, and suboptimal system performance.

One or more embodiments of the present disclosure are directed to managing an attached memory device to improve the TCO of the attached memory. The memory device may include one or more device-managed memory tiers that may be associated with different latencies. In some embodiments, a controller of the memory device monitors accesses to different memory regions of the attached memory to move data in and out of the memory regions based on the monitored accesses. For example, a memory region or page with less than a threshold access rate may be deemed to be a "cold" region that may be migrated (e.g., demoted) from a lower-latency tier of the device (e.g., DRAM buffer) to a higher-latency tier of the device (e.g., NAND), to achieve overall better utilization of the attached memory.

The page migration may be initiated by the host. In some embodiments, the migration is initiated or proposed by the attached memory device. For a host-initiated migration, the host may provide commands (also referred to as "hints") to the memory device of one or more memory pages (e.g., blocks of data associated with one or more memory addresses) that are to be accessed in a near future, and should be moved from a higher-latency tier of the device to a lower-latency tier of the device. The host may also provide commands or hints to the memory device of one or more pages that are no longer needed, and should be moved from the lower-latency tier of the device to a higher-latency tier of the device.

For a device initiated or proposed migration, the device may identify one or more memory pages that are candidates for movement between the device-managed memory tiers. The device may initiate or propose the migration based on a detected trigger, such as, for example, fullness of the DRAM buffer in the memory device. As the DRAM buffer gets full, one or more pages (e.g., cold pages) in the DRAM buffer identified by the device may be moved to relieve pressure in the DRAM buffer. Conversely, as the fullness of the DRAM buffer drops, one or more pages in the higher-latency tier (e.g., warm pages) may be moved to the DRAM buffer to take advantage of the additional space to maintain given performance expectations or service-level agreement (SLA).

In some embodiments, the memory device may transmit a notification to the host in response to movement of a page in/out of a device-managed memory tier. The host may update a page table to identify the page as being present or not present in an advertised latency tier (e.g., the DRAM buffer). For example, based on a notification of a cold page that is demoted from the lower-latency tier of the device to the higher-latency tier of the device, the host may update the page table to mark the page as "not present in the advertised latency tier." The marking of the page in such a manner may cause a page fault when an application attempts to access the page. A fault handler executed by the host operating system (OS) may detect that the page fault is due to the page being absent in the advertised latency tier, and may wait for the memory device to return the page, instead of the OS taking action to retrieve the page.

In another example, based on a notification of a warm page that is promoted from the higher-latency tier of the device to the lower-latency tier of the device, the host may update the page table to mark the page as "present in the advertised latency tier." In some embodiments, the marking of the page in this manner may avoid the triggering of a page fault when an application attempts to access the page. Instead, the host transmits a request to load the page, and forwards the page to the requesting application upon receipt.

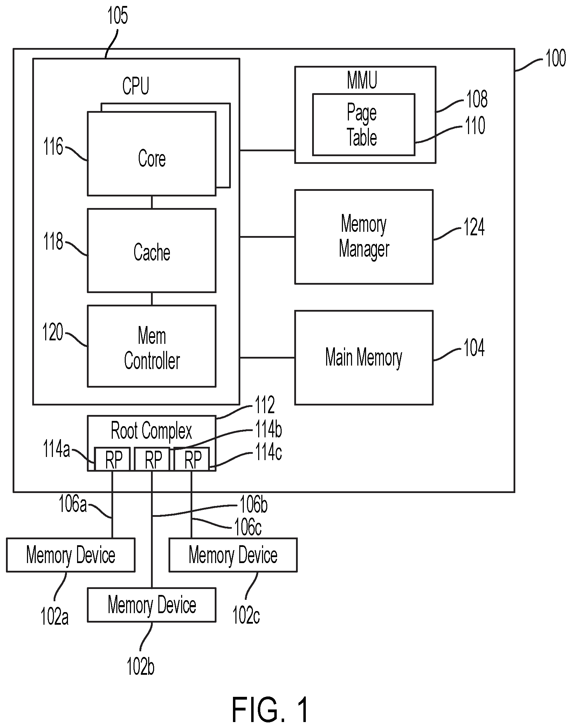

FIG. 1 depicts a block diagram of a memory system configured for device-managed memory-tiering according to one or more embodiments. The system includes a host computing device (referred to as the "host") 100 coupled to a one or more storage or memory devices 102a-102c (collectively referenced as "memory devices" 102).

The host 100 includes a processor 105, main memory 104, memory management unit (MMU) 108, and root complex (RC) interface 112. The processor 105 may include one or more central processing unit (CPU) cores 116 configured to execute computer program instructions and process data stored in a cache memory 118 (also simply referred to as "memory" or "cache"). The cache 118 may be dedicated to one of the CPU cores 116 or shared by various ones of the CPU cores.

The cache 118 may be coupled to a memory controller 120 which in turn is coupled to the main memory 104. The main memory 104 may include, for example, a dynamic random access memory (DRAM) storing computer program instructions and/or data (collectively referenced as data) used by a process (e.g., an Al application) executed by a core 116. The data may be loaded into the cache memory 118 during execution of the process, and the process may consume the data from the cache memory. If the data to be consumed is not already in the cache, the process may need to query other memory devices in the memory hierarchy to find the data. For example, if the data that is sought is not in the cache 118, the process may query main memory 104, and if not in the main memory 104, query the memory device 102.

In some embodiments, the cache 118, main memory 104, and/or memory devices 102 (collectively referenced as memory) may be included in a memory system that allows memory tiering to deliver an appropriate cost or performance profile. In this regard, the different types of memory may be organized in a memory hierarchy or tier based on a characteristic of the memory. The characteristic may be access latency. In some embodiments, a higher-tiered memory has a lower access latency than a lowered-tiered memory.

In some embodiments, the one or more of the memory devices 102 are memory devices of the same or different type, that are aggregated into a storage pool. For example, the storage pool may include one or more CXL attached memory devices (also referred to as CXL memory). The CXL memory may adhere to a CXL.mem protocol where the host 100 may access the memory device using commands such as load and store commands. In this regard, the host 100 may act as a requester and the CXL memory may act as a subordinate.

In some embodiments, the memory device 102 has a higher access latency than the main memory 104. As such, the memory device 102 may be positioned in the overall memory hierarchy to be vertically below the main memory 104. In some embodiments, the memory elements within the memory device 102 are also organized according to sub-tiers of an internal memory hierarchy. Movement between the sub-tiers of the internal memory hierarchy may be managed by a controller of the storage device. Memory pages may be moved in and out of the sub-tiers based on, for example, cold-range or coldness monitoring of the memory 102. Because the movement between the sub-tiers is constrained to the memory components within the memory device 102, the movement may be described as horizontal movement or device-managed memory tiering.

In some embodiments, an application (e.g., an Al application) executed by the core 116 generates requests for a memory device 102. The requests may include requests to read/load data, write/store data, erase/flush data, and/or the like, to perform an Al operation such as an Al inference or training operation. One or more of the requests may be associated with a virtual memory address. In some embodiments, the processor may invoke the MMU 108 to translate a virtual address (e.g., a virtual page number) to a physical address. The MMU 108 may include a page table 110 that maps the virtual address to the physical address. The request transmitted to the memory device 102 may include the physical address corresponding to the virtual address.

In some embodiments, the page table 110 includes other information for purposes of memory management and protection. For example, the page table 110 may include status information or bits indicating if a page is present (e.g., in the main memory 104), present in an advertised latency tier of the memory device 102, not present or invalid, or not present in the advertised latency tier. For example, if the status information indicates that a page is not present in the main memory 104 or in an advertised latency tier, a page fault may be triggered. In some embodiments, if the page fault is triggered due to the page not being present in the advertised latency tier, a page fault handler (e.g., host OS) may simply return and potentially handle other tasks until the memory device returns the requested memory page, allowing efficient use of the processing core 116.

In some embodiments, the processor 105 sends and receives data, requests, messages, and/or notifications to and from the memory devices 102 via the RC interface 112 and interface connections 106a-106c (collectively referenced as 106). For example, the processor 105 may transmit data access requests, configuration requests, requests for page promotion or demotion, and/or the like. The memory device 102 may transmit data and notifications to the processor via the RC interface 112. For example, the memory device 102 may transmit responses to the requests from the processor via the interface connections 106 to the RC interface 112, which in turn delivers the responses to the processor 105.

In some embodiments, the interface connections 106 (e.g., the connector and the protocol thereof) includes various general-purpose interfaces such as, for example, Ethernet, Universal Serial Bus (USB), and/or the like. In some embodiments, the interface connections 106 (e.g., the connector and the protocol thereof) may include (or may conform to) a Compute Express Link (CXL), Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

The RC interface 112 may be, for example, a PCIe interface configured to implement a root complex for connecting the processor 105 and the host main memory 104 to the memory devices 102. The RC interface 112 may include one or more ports 114a-114c to connect the one or more memory devices 102 to the RC. In some embodiments, the MMU 108 and/or page table 110 may be integrated into the RC 112 interface for allowing the address translations and/or page updates to be implemented by the RC interface.

In some embodiments, the host 100 includes a memory manager 124 for configuring the memory device 102 with coldness or cold range monitoring. In this regard, the memory manager 124 may identify and transmit configuration parameters to the memory device 102. For example, the memory manager 124 may identify and transmit a minimum threshold access rate or maximum access interval that the memory device 102 may use to determine that a memory region is cold. In some embodiments, the memory manager 124 may identify and transmit a maximum threshold access rate or minimum access interval that the memory device 102 may use to determine that a memory region is hot. A memory region that has an access rate between the minimum and maximum threshold access rate may be identified by the memory device 102 as a warm region.

In some embodiments, the memory manager 124 is configured to process notifications generated by the memory devices 102. The notifications may indicate movement of pages in or out of the device-managed memory tiers. The memory manager 124 may interact with the MMU 108 to update the status of the associated pages in the page table 110 based on the notifications. For example, movement of a page into an advertised latency tier (e.g., from NAND flash into DRAM of the memory device) may cause the associated status bit in the page table 110 to indicate that the page is present in the advertised latency tier. Movement of a page out of the advertised latency tier (e.g., from DRAM into NAND flash) may cause the associated status bit in the page table 110 to indicate that the page is not present in the advertised latency tier. In this regard, the memory device 102 may advertise (e.g., at startup) the access latency that the host 100 may experience for a data access request to be fulfilled when data is present in DRAM.

In some embodiments, the memory manager 124 may further be configured to generate messages or hints to the memory device 102 of memory regions or pages that are to be promoted or demoted either vertically within the memory hierarchy (e.g., from/to the memory device to/from the main memory 104), or horizontally within the device-managed sub-tiers of the memory device 102. For example, the memory manager 124 may identify frequently accessed memory pages or pages that are anticipated to be accessed next by an application executed by the core 116. The memory manager 124 may generate and transmit a promotion request or hint for the memory regions to the memory device 102. In another example, the memory manager 124 may identify one or more memory regions that may no longer be needed, and transmit a demotion request or hint for the memory regions to the memory device 102.

The memory manager 124 may be implemented via hardware, firmware (e.g., via an application-specific integrated circuit (ASIC)), software, or any combination of software, firmware and/or hardware. For example, the memory manager 124 may be implemented as a memory tier programming library that is loaded by an application (e.g., at runtime). In some embodiments, all or a portion of the functionality of the memory manager 124 is incorporated into the MMU 108.

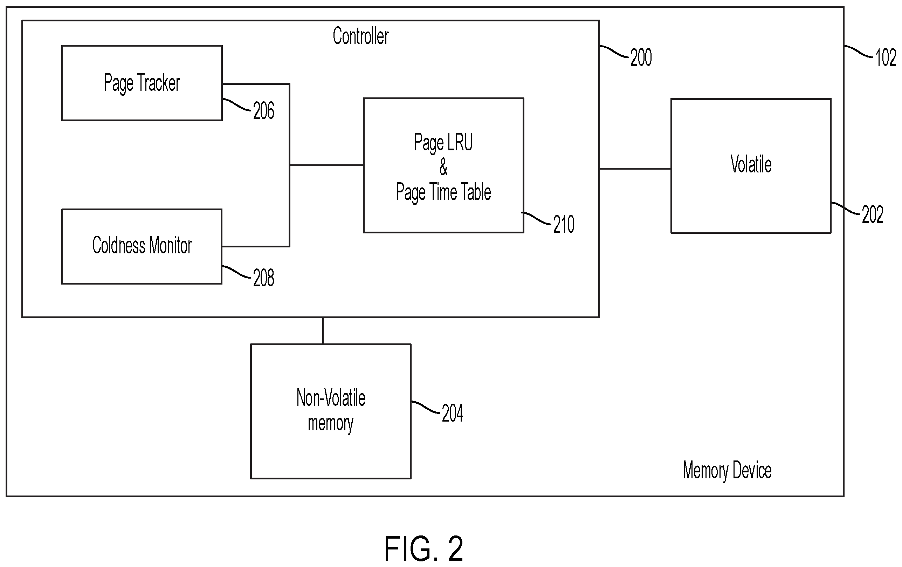

FIG. 2 depicts a block diagram of the memory device 102 according to one or more embodiments. The memory device 102 includes a host interface and controller (collectively referred to as a controller) 200, volatile memory 202 (also referred to as a buffer memory or first sub-tier memory), and non-volatile memory (NVM) 204 (also referred to as a backing storage, TCO-efficient memory, or second sub-tier memory).

The volatile memory 202 may include a relatively low-latency memory such as, for example, DRAM, although embodiments are nor limited thereto. For example, in some embodiments, the volatile memory 202 may include a random access memory (RAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), register memory, and/or the like.

The NVM 204 may include higher latency memory such as, for example, magnetoresistive random-access memory (MRAM), Non-Volatile Dual In-line Memory Module (NVDIMM), and/or NAND flash, although embodiments are not limited thereto. For example, in some embodiments, the NVM 204 may include non-volatile computer-readable storage medium such as a floppy disk, flexible disk, hard disk, solid-state storage (SSS) (for example a solid-state drive (SSD)), solid state card (SSC), solid state component (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM) resistive random-access memory (RRAM), Silicon-Oxide-Nitride-Oxide-Silicon memory (SONOS), floating junction gate random access memory (FJG RAM), Millipede memory, racetrack memory, and/or the like.

The controller 200 may be configured to exchange commands and/or data with the RC interface 112 over the interface connections 106. In some embodiments, the controller 200 may include an associated software layer to manage the physical connector of the interface connections 106. The controller 200 may respond to data access requests (e.g., load and store requests) received from the host 100 over the interface connection 106. The controller 200 may also respond to promotion and demotion requests, configuration commands, and/or the like, from the host 100.

In some embodiments, the controller 200 controls access to and from the volatile memory 202 and NVM 204. In this regard, the controller 200 may include at least a processor for interfacing with the host 100 and the memory components 202, 204. The processor may include, for example, a digital circuit (e.g., a microcontroller, a microprocessor, a digital signal processor, or a logic device (e.g., a field programmable gate array (FPGA), an application-specific integrated circuit (ASIC), and/or the like)) capable of executing data access instructions (e.g., via firmware and/or software) to provide access to the volatile memory 202 and the NVM 204.

In some embodiments, the controller 200 includes a page tracker module 206 and a coldness monitor 208. The page tracker module 206 and the coldness monitor 208 may be implemented via hardware, firmware (e.g., via an ASIC) and/or by a more general purpose hardware, such as a central processing unit (CPU) configured to execute instructions stored in a non-transitory storage medium. Although in the embodiment of FIG. 2 the page tracker module 206 and the coldness monitor 208 are depicted as separate functional units, a person of skill in the art will recognize that the functionality of the page tracker module 206 and the coldness monitor 208 may be combined or integrated into a single module, or further subdivided into further sub-modules without departing from the scope of the inventive concept.

In some embodiments, the page tracker module 206 and/or the coldness monitor 208 are invoked for moving or storing memory pages between the volatile memory 202 and the NVM 204 for maximizing the TCO of the memory device 102. The movement between the memory components of the memory device 102 may be based on coldness monitoring of the memory pages by the memory device 102. In some embodiments, the coldness monitor 208 is configured to receive a configuration command from the host 100 (e.g., the memory manager 124) to set up the coldness or cold-range monitoring by the memory device 102. The configuration command may identify the parameters for the coldness monitoring such as, for example, an access rate or access interval (collectively referenced as a coldness threshold) that determines whether a page is cold, a page range or range of memory addresses to monitor, a sampling time period for tracking the page accesses, a monitoring time interval, an access frequency (e.g., access rate, access interval, etc.), and/or the like. In some embodiments, the coldness monitor 208 communicates one or more of the parameters (e.g., the sampling time period) to the page tracker 206 to configure the page tracker to track the page accesses (e.g., accesses to memory addresses associated with the page). In some embodiments, the host 100 transmits a configuration command and associated parameters to the page tracker in addition or in lieu of the parameters transmitted by the coldness monitor.

The page tracker 206 may maintain a linked list of page identifiers that is updated, at a sampling interval, based on page access requests from the host 100. In some embodiments, the linked list may organized as a least recently used (LRU) list of page identifiers (referred to as a page LRU list) that stores the identifier of a currently accessed page at the head of the list, and the identifier of the least recently accessed page at the tail of the list.

In some embodiments, the page tracker 206 maintains a page time table that contains information on an elapsed time interval for one or more pages indicative of an amount of time that has elapsed since the page (e.g., a memory address associated with the page) was last accessed (also referred to as an access interval). The page time table may be an inverted table that identifies the page that was accessed at a current sampling time period at the top of the table and the page with the longest access interval at the bottom of the table. The page LRU list and the page time table may be stored in a memory 210 of the controller 200.

In some embodiments, the coldness monitor 208 invokes the page tracker 206 to monitor the page accesses (e.g., accesses to memory addresses) within the configured page range for the configured monitoring time period. The page tracker 206 may update the page LRU list and the page time table based on the monitored page accesses.

In some embodiments, the coldness monitor 208 detects a trigger event, such as expiration of the monitoring time period, and identify the pages (if any) that may be characterized as cold. For example, the coldness monitor 208 may identify pages in the page time table with an access interval that is greater than the configured threshold access interval, and demote (e.g., move or store) the pages from the volatile memory 202 to the non-volatile memory 204. A person of skill in the art should recognize that an access rate of a page being less than a configured access rate may also identify the page as cold. In some embodiments, the coldness monitor 208 requests authorization from the host 100 and proceeds with the demotion based on receiving the authorization from the host. In some embodiments, the coldness monitor 208 performs a demotion action without requesting authorization from the host 100.

The coldness monitor 208 may transmit a notification to the host 100 upon completion of the demotion action. In this regard, the host 100 (e.g., the memory manager 124) may update the page table 110 to indicate that the demoted page is not present in the advertised latency tier (e.g., the volatile memory 202). By updating the page table 110 in this manner, the host OS need not attempt to retrieve the page via a traditional page fault process when an application requests the demoted page. Instead, the host OS may wait for the page to be returned by the memory device 102. In some embodiments, the memory controller 120 transmits a command to the memory device 102 to load the demoted page in response to detecting that the page is not present in the advertised latency tier.

Another trigger event for page promotion or demotion may relate to the fullness of the volatile memory 202. In some embodiments, if the controller 200 monitors the available capacity of the volatile memory 202. When the controller 200 determines that the volatile memory 202 has reached a threshold level of fullness, the coldness monitor 208 may transmit a request to the memory manager 124 with a list of candidate pages to be demoted to the non-volatile memory 204. The list of candidate pages may be a certain number of pages with the longest access intervals in the page time table, or the pages (e.g., all pages) with access intervals that are above a threshold access interval. The host 100 may accept the recommendation for demotion from the memory device 102 and update its page table 110 accordingly.

In some embodiments, the host 100 identifies a list of pages that it recommends be demoted to the non-volatile memory 204 (e.g., in lieu of the pages recommended by the memory device 102). The pages recommended by the host 100 may be based on anticipated memory accesses by the application running on the CPU core 116. The pages recommended by the host may be different from the pages recommended by the coldness monitor 208. For example, if the memory manager 124 of the host 100 detects that a page recommended by the coldness monitor 208 due to the access interval exceeding the threshold interval is to be accessed next by the application, the host may provide a recommendation that may prevent the page from being demoted. In some embodiments, the host my transmit a recommendation of a different page that is to be demoted.

In some embodiments, the coldness monitor 208 identifies warm pages to be moved or stored from the non-volatile memory 204 to the volatile memory 202. In this regard, the coldness monitor 208 may include a hotness threshold that may be provided by the host 100 (e.g., with the coldness configuration information). In some embodiments, pages with an access interval higher than the hotness threshold interval, but lower than the coldness threshold interval may be identified as warm pages. In some embodiments, warm pages identified to be in the non-volatile memory 204 may be moved or promoted to the volatile memory 202 for more efficient use of the memory device 102. The movement may be with or without pre-authorization from the host. In some embodiments, the coldness monitor 208 transmits a notification to the host with the page identifiers (IDs) or addresses of the pages that were promoted. The host 100 may update the page table based on the notification to indicate that the promoted page is now present in the advertised latency tier (e.g., the volatile memory 202).

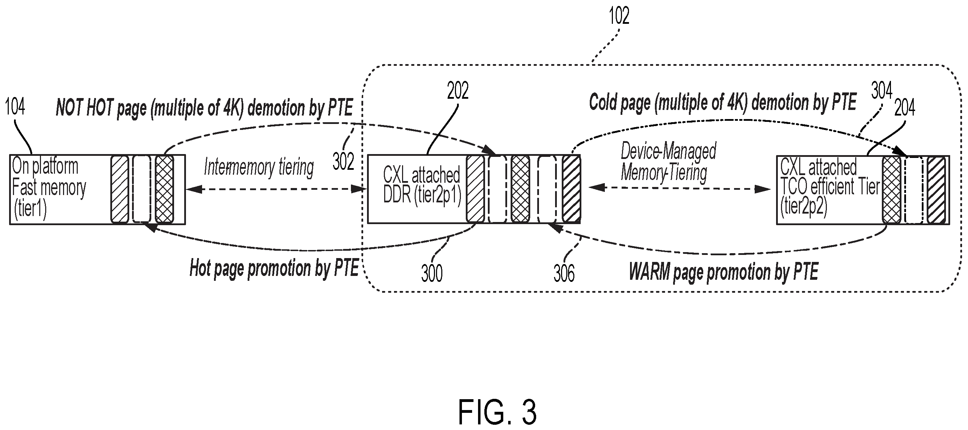

FIG. 3 depicts a conceptual flow diagram of page demotion and promotion between memory tiers of a memory hierarchy, and between device managed sub-tiers of a memory device 102, according to one or more embodiments. In some embodiments, the memory manager 124 monitors the page accesses for promoting and demoting pages across the vertical memory hierarchy. In this regard, hot pages that satisfy the hotness threshold may be moved or promoted 300 into the main memory 104 of the host 100 via a promotion command (e.g., from the host). Warm pages in the main memory 104 of the host 100 that fall below the hotness threshold may be demoted 302 to the volatile memory 202 of the memory device 102 via a demotion command (e.g., from the host).

Pages may also be promoted in and out the device managed sub-tiers under control of the memory device 102. In this regard, the controller 200 (e.g., the coldness monitor 208) may identify cold pages in the volatile memory 202 that satisfy the coldness threshold, and demote 304 the cold pages to the non-volatile memory 204. In some embodiments, the demotion may be based on detecting a threshold fullness of the volatile memory 202, or an end of a monitoring period. The controller 200 (e.g., coldness monitor 208) may also identify warm pages in the non-volatile memory with access frequencies between the coldness threshold and the hotness threshold, and promote 306 the warm pages to the volatile memory 202. For example, the promotion may be based on detecting capacity of the volatile memory 202 above a threshold capacity. The page LRU list may store information of the pages that are to be demoted or promoted to or from the non-volatile memory 204. A notification may be transmitted to the host 100 after completion of a promotion or demotion between the sub-tiers, and the host may update the page table 110 accordingly based on the notification.

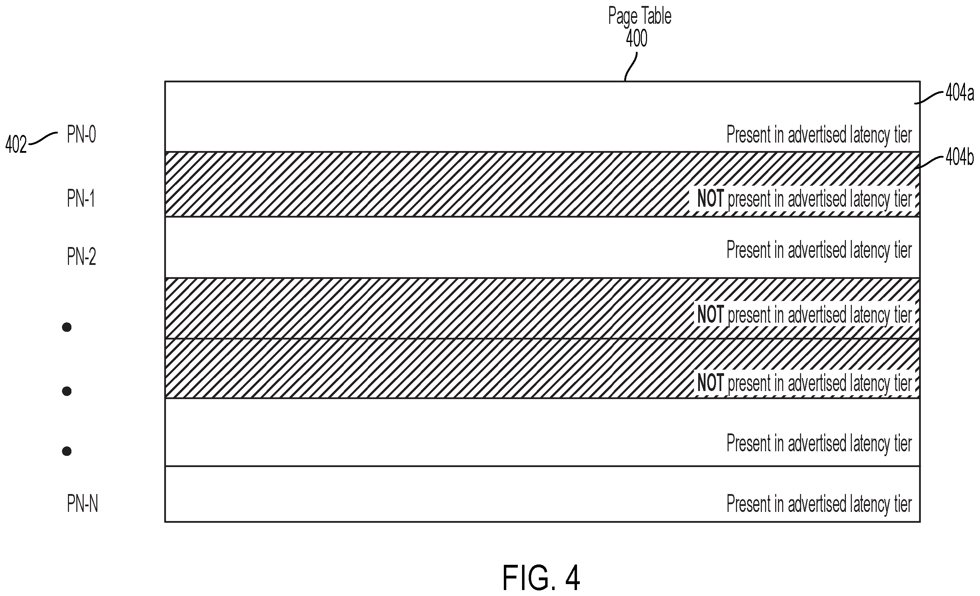

FIG. 4 depicts an example page table 400 according to one or more embodiments. The page table 400 may be similar to or may be the page table 110 of FIG. 1. In some embodiments, the page table 400 includes one or more page table entries (PTEs) 402 associated with a page number or ID. A PTE 402 may store a status bit 404a, 404b (collectively referenced as 404) indicating whether the associated page is present in an advertised latency tier (e.g., the volatile memory 202), or not. Although not shown in FIG. 4, the PTE may include other information such as, for example, an associated physical memory address, status bit indicating whether the page is present in the main memory 104, and/or the like.

In some embodiments, the page table is accessed by the MMU 400 in response to an instruction from an application executed by the core 116 to access a specific memory address. The memory address may be accessed to perform an Al operation such as an inference operation. The MMU 400 may examine the status of the memory address (e.g., the corresponding page table entry) to determine presence of the memory address in the main memory 104. For example, the MMU 400 may examine a corresponding main memory presence bit (not shown).

In some embodiments, the main memory presence bit is included in the page table 400 or maintained in a separate main memory page table (not shown). The main memory presence bit may be set based on the memory address being present in the main memory 104. In some embodiments, if the memory address is not present in the main memory 104, an "invalid" or "not present" bit is set, causing a page fault when the memory address is accessed by an application executed by the core 116.

In some embodiments, if the memory address is stored in the volatile memory 202 of the memory device 102, the corresponding PTE 402 may have a status bit 404 set to indicate that the memory address is stored in the advertised latency tier (e.g., the volatile memory 202). In some embodiments, if the memory address is stored in the advertised latency tier, the main memory presence bit is set as being present to prevent a page fault. In this regard, the memory controller 120 may transmit a request for the memory address to the memory device 102 (e.g., via the RC interface 112), and forward the received data to the application upon receipt of the requested memory address.

In some embodiments, if the PET 402 has a status bit 404 set to indicate that the memory address is not stored in the advertised latency tier, a page fault may be triggered. However, in some embodiments, the host OS page fault handler may simply return instead of handling the page fault as it would in response to an "invalid" or "not present" status. That is, in some embodiments, instead of the page fault handler taking steps to retrieve the requested page, it may simply wait for the page to be returned by the memory device 102. In some embodiments, the page fault handler may be configured to do other optional housekeeping tasks while waiting for the page to be returned. The housekeeping tasks may include transmitting prefetch requests to the memory device 102 of pages anticipated to be accessed by the application (e.g., pages adjacent to the currently requested page).

In some embodiments, the page table 400 is updated based on notifications from the memory device 102. For example, a PTE 402 may be updated in response to promotion and demotion of a corresponding page by the coldness monitor 208 to and from the volatile memory 202.

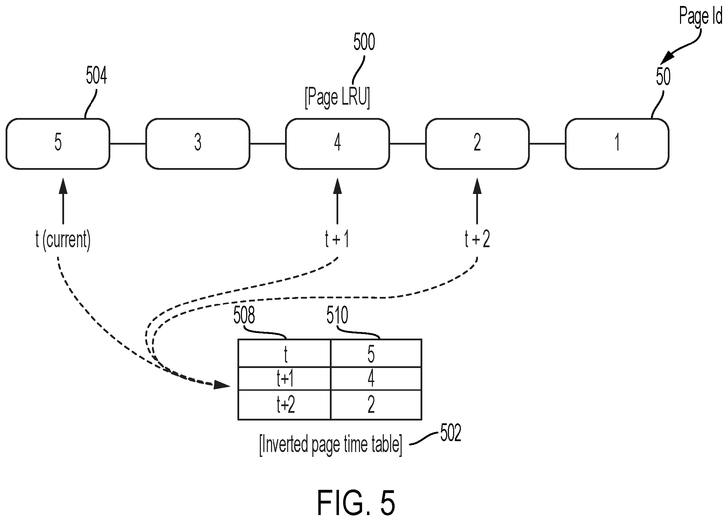

FIG. 5 depicts a conceptual layout diagram of a page LRU 500 and an associated page time table 502 according to one or more embodiments. In some embodiments, the page LRU 500 is implemented as a linked list of page identifiers, where a head 504 of the list identifies a page accessed at a current time, and a tail 506 of the list identifies a page accessed earliest in time. The page time table 502 may be an inverted table that identifies an amount of time that has elapsed 508 since a current sampling time (t), and the associated page identifiers 510 that were accessed for the elapsed times.

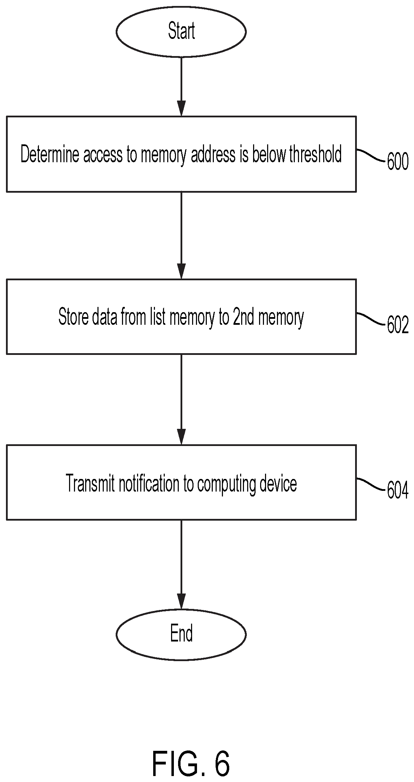

FIG. 6 depicts a flow diagram of a process for device-managed memory-tiering according to one or more embodiments. The process starts, and in act 600, the memory device 102 determines that accesses associated with a first memory address is below a minimum threshold (e.g., a minimum access threshold). In this regard, the controller 200 of the memory device 102 monitors a frequency of access requests (e.g., store or load requests) for the first memory address for determining coldness of the first memory address. In some embodiments, the minimum access threshold that determines whether a page associated with a memory address is cold, is configured by the host 100.

Based on determining that the accesses are below the minimum access threshold, the memory device 102, in act 602, demotes or stores data associated with the first memory address from a first memory (e.g., the volatile memory 202) to a second memory (e.g., the NVM 204). In some embodiments, the demotion of the memory address (e.g., a page associated with the memory address) may be based on the controller 200 detecting a threshold level of fullness of the first memory. In some embodiments, the demotion of the memory address (e.g., a page associated with the memory address) may be based on receiving a request from the computing device for moving the first memory address (e.g., a demotion hint).

In some embodiments, the first memory is associated with a first tier of a memory hierarchy, and the second memory is associated with a second tier of the memory hierarchy. The first tier and the second tier may correspond to different access latencies. For example, the access latency of the first memory may be shorter than the access latency of the second memory.

In act 604, the controller 200 transmits a notification to the host 100 based on moving or storing the data from the first memory to the second memory. The notification may identify the first memory address stored from the first memory to the second memory. The host 100 may take an action with respect to the first memory based on the notification. The action may include modifying an entry of the page table 400 associated with the first memory address for indicating lack of presence or absence of the memory address in the first memory. For example, the entry may indicate that the first memory address is not present in the advertised latency tier.

In some embodiments, the action may include a prefetch request or promotion hint or recommendation for the first memory address. The prefetch request or promotion hint for the demoted first memory address may be based on predicting (e.g., by the host 100) that the first memory address is to be accessed by an application running on the core 116.

In some embodiments, the memory device 102 may monitor a second access (e.g., load or store requests) associated with a second memory address. Based on monitoring the second access, the memory device 102 may transmit a request to the computing device (e.g., the host 100) for moving (e.g., horizontally promoting or demoting) the second memory address. The host 100, however, may have a recommendation of a different memory to be moved. Thus, based on the request, the memory device 102 may receive identification (e.g., a hint or recommendation) of a third memory address from the computing device that is to be moved. The memory device 102 may move the third memory address identified by the computing device (e.g., instead of the second memory address).

In some embodiments, the memory device 102 may monitor a second access associated with a second memory address stored in the second memory (e.g., the NVM 204). The memory device 102 may determine that the second access is above the minimum access threshold and below a maximum access threshold (e.g., a warm page). Based on determining that the second access is above the minimum access threshold and below the maximum access threshold, the memory device 102 may store (e.g., promote) the second memory address from the second memory (e.g., the NVM 204) to the first memory (e.g., the volatile memory 202).

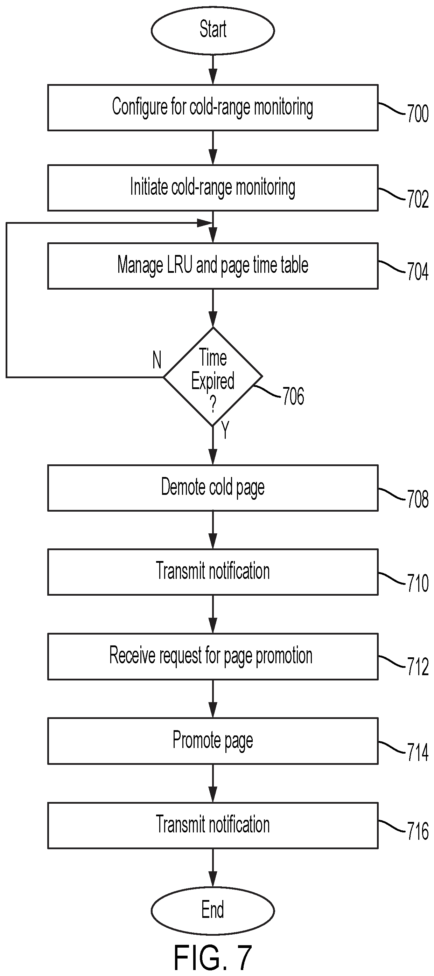

FIG. 7 depicts another flow diagram of a process for device-managed memory-tiering according to one or more embodiments. The process starts, and in act 700, the memory device 102 receives a signal from the host 100 for configuring the memory device 102 for cold-range monitoring based on configuration data from the host 100. The configuration data may include a coldness threshold that determines whether a page is cold, a page range or range of memory addresses to monitor, a sampling time period for tracking the page accesses and updating the page LRU 500 and page time table 502, a monitoring time interval, and/or an access frequency.

In act 702, the memory device 102 receives a signal from the host 100 to initiate cold-range monitoring according to the configured parameters.

As memory access commands are received from the host 100, the page tracker 206 updates, in act 704, at a sampling time period, the page LRU 500 and page time table 502. In this regard, the page accessed at the current sampling time (t) is placed at a head of the page LRU, and further stored at a top of the page time table 502.

In act 706, a determination is made as to whether a monitoring time interval has expired. If the answer is NO, the page tracker 206 continues to monitor page accesses and update the page LRU 500 and page time table 502.

If the answer is YES, the coldness monitor 208 identifies the cold pages from the page time table 502 and page LRU 500. In this regard, one or more pages which access times are longer than a minimum threshold access time may be identified from the page time table 502.

In act 708, the coldness monitor 208 transmits a command to demote the identified pages. In this regard, a command may be transmitted to store the one or more cold pages from the volatile memory 202 to the non-volatile memory 204. The page LRU 500 may be updated to remove the demoted cold pages.

In act 710, the coldness monitor 208 transmits a notification to the host 100 (e.g., the memory manager 124) of the demoted pages. The memory manager 124 may update the page table 400 based on the notification. In this regard, the memory manager 124 may update a status of the demoted pages to reflect lack of presence of the identified pages in the volatile memory 202. For example, the status may reflect that the pages are not present in the advertised latency tier.

In act 712, the coldness monitor 208 receives a request for page promotion 712 (e.g., from the memory manager 124). The request may be, for example, based on identification of one or more pages that are anticipated to be accessed by a current application.

In act 714, the coldness monitor 208 transmits a command to promote the identified pages from the NVM 204 to the volatile memory 202.

In act 716, the coldness monitor 208 transmits a notification to the host 100 (e.g., the memory manager 124) of the promoted pages. The memory manager 124 may update the page table 400 based on the notification. In this regard, the memory manager 124 may update a status of the promoted pages to reflect presence of the identified pages in the volatile memory 202. For example, the status may reflect that the pages are present in the advertised latency tier.

As a person of skill in the art should appreciate, the embodiments of the present disclosure address the problem of lack of management of cold pages of a memory device that may lead to suboptimal performance, increased power consumption, and higher operational costs. By configuring the memory device 102 to monitor and move cold pages to a higher latency memory, the lower latency memory may be available to store the more frequently accessed (e.g., warm pages), for more efficient use of the memory device 102. For example, the warm pages may be retrieved with lower latency for improved performance of the memory device 102.

In some embodiments, improvement of latency of the memory device 102 may be useful to enhance performance and responsiveness across a wide range of Al applications, such as, for example, Al applications in which speed and latency may be a particularly important performance metric. For example, in autonomous vehicle systems, Al tasks such as image classification and object detection may be carried out using deep convolutional neural networks (CNNs) and the like, which perform numerous operations that require data to be stored and retrieved from the memory device 102. Embodiments of the present disclosure that manages, for example, the movement of cold pages may reduce the latency associated with such data accesses by the Al applications, allowing the Al applications to perform inference operations at an increased speed. For example, inferences or predictions related to image classification and object detection may be performed at an increased speed to support faster detection of traffic signs, pedestrians, other vehicles, and road features, thereby contributing to improved responsiveness and safety in real-time driving scenarios. For example, the speed of the inferences or predictions may control the speed in which an autonomous vehicle system is controlled to move to avoid collision or other hazardous situations.

In natural language processing (NLP) applications, such as speech-to-text conversion or real-time translation, transformer-based models may perform a large number of Al computations as part of their attention mechanisms and feedforward layers. The embodiments of the present disclosure that decrease latency in accessing stored data may help accelerate the Al computations. As a result, translation systems may respond more promptly to incoming speech or text, and thus perform more seamlessly to meet the speed of natural conversation.

In the above examples, latency of the memory device is reduced for better performance of the Al application. In some embodiments, latencies of the memory devices are better managed by using memory devices with different latencies. For example, an Al application may need a total of 1TB memory as active memory, but only 10% may be used frequently, meeting the hotness criteria (e.g., 90% access rate). Providing 1TB of high performance, low latency memory tier may be costly in terms of money and power consumption. Embodiments of the present invention allow a provision of 10% of low memory tier and 90% of high latency tier to save cost and provide an overall better solution on performance per dollar metric.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hardwired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for device-managed memory-tiering have been specifically described and illustrated herein, many modifications and variations within the scope of the appended claims will be apparent to those skilled in the art.

The systems and methods for device-managed memory-tiering may contain one or more combination of features set forth in the below statements.

Statement 1. A memory device coupled to a computing device, the memory device comprising: a first memory associated with a first tier of a memory hierarchy; a second memory associated with a second tier of the memory hierarchy, wherein the first tier and the second tier each correspond to a different access latency; and a processor coupled to the first memory and the second memory, wherein the processor is configured to execute instructions that cause the processor to: determine that access associated with a first memory address is below a minimum threshold; based on determination that the access is below the minimum threshold, store data associated with the first memory address from the first memory to the second memory; and transmit a notification to the computing device based on storing of the data from the first memory to the second memory, wherein the computing device is configured to take an action with respect to the first memory address in response to receiving the notification.

Statement 2. The memory device of Statement 1, wherein the instructions further cause the processor to monitor a frequency of access requests for the first memory address from the computing device.

Statement 3. The memory device of Statement 1, wherein the minimum threshold is configured by the computing device.

Statement 4. The memory device of Statement 1, wherein the instructions that cause the processor to store data associated with the first memory address from the first memory to the second memory include instructions that cause the processor to detect a threshold level of fullness of the first memory.

Statement 5. The memory device of Statement 1, wherein the instructions that cause the processor to store data associated with the first memory address from the first memory to the second memory include instructions that cause the processor to detect a request from the computing device for moving the first memory address.

Statement 6. The memory device of Statement 1, wherein the notification identifies the first memory address stored from the first memory to the second memory.

Statement 7. The memory device of Statement 1, wherein the action includes modification of an entry of a page table in the computing device associated with the first memory address for indicating absence of the data at the memory address of the first memory.

Statement 8. The memory device of Statement 1, wherein the action includes transmitting a prefetch request to move the data into the first memory address.

Statement 9. The memory device of Statement 1, wherein the instructions further cause the processor to: monitor a second access associated with data at a second memory address; based on monitoring the second access, transmit a request to the computing device for moving second data into or out of the second memory address; based on the request, receive identification of a third memory address from the computing device; and based on the identification of the third memory address, move data into or out of the third memory address identified by the computing device.

Statement 10. The memory device of Statement 1, wherein the instructions further cause the processor to: monitor a second access associated with a second memory address stored in the second memory; determine that the second access is above the minimum threshold and below a maximum threshold; based on determining that the second access is above the minimum threshold and below the maximum threshold, store second data from the second memory address to the first memory.

Statement 11. A method comprising: determining, by a processor, that access associated with a first memory address is below a minimum threshold; based on determining that the access is below the minimum threshold, storing, by the processor, data associated with the first memory address from a first memory to a second memory, the first memory being associated with a first tier of a memory hierarchy, and the second memory being associated with a second tier of the memory hierarchy, wherein the first tier and the second tier each correspond to a different access latency; transmitting, by the processor, a notification to a computing device based on storing of the data from the first memory to the second memory, wherein the computing device is configured to take an action with respect to the first memory address in response to receiving the notification.

Statement 12. The method of Statement 11 further comprising monitoring a frequency of access requests for the first memory address from the computing device.

Statement 13. The method of Statement 11, wherein the minimum threshold is configured by the computing device.

Statement 14. The method of Statement 11, wherein the storing the data associated with the first memory address from the first memory to the second memory include detecting a threshold level of fullness of the first memory.

Statement 15. The method of Statement 11, wherein the storing the data associated with the first memory address from the first memory to the second memory include detecting a request from the computing device for moving the first memory address.

Statement 16. The method of Statement 11, wherein the notification identifies the first memory address stored from the first memory to the second memory.

Statement 17. The method of Statement 11, wherein the action includes modification of an entry of a page table in the computing device associated with the first memory address for indicating absence of the data at the memory address of the first memory.

Statement 18. The method of Statement 11, wherein the action includes transmitting a prefetch request to move the data into the first memory address.

Statement 19. The method of Statement 11 further comprising: monitoring a second access associated with a second memory address; based on monitoring the second access, transmitting a request to the computing device for moving second data into or out of the second memory address; based on the request, receiving identification of a third memory address from the computing device; and based on the identification of the third memory address, moving third data into or out of the third memory address identified by the computing device.

Statement 20. The method of Statement 11 further comprising: monitoring a second access associated with a second memory address stored in the second memory; determining that the second access is above the minimum threshold and below a maximum threshold; based on determining that the second access is above the minimum threshold and below the maximum threshold, storing second data from the second memory address to the first memory.

## Claims

1. A method comprising:
determining (600), by a processor, that access associated with a first memory address is below a minimum threshold;
based on determining that the access is below the minimum threshold, storing (602), by the processor, data associated with the first memory address from a first memory (202) to a second memory (204), the first memory (202) being associated with a first tier of a memory hierarchy, and the second memory (204) being associated with a second tier of the memory hierarchy, wherein the first tier and the second tier each correspond to a different access latency;
transmitting (604), by the processor, a notification to a computing device (100) based on storing of the data from the first memory (202) to the second memory (204), wherein the computing device (100) is configured to take an action with respect to the first memory address in response to receiving the notification.

2. The method of claim 1 further comprising monitoring a frequency of access requests for the first memory address from the computing device (100).

3. The method of claim 1 or 2, wherein the minimum threshold is configured by the computing device (100).

4. The method of any one of claims 1 to 3, wherein the storing the data associated with the first memory address from the first memory (202) to the second memory (204) includes detecting a threshold level of fullness of the first memory (202).

5. The method of any one of claims 1 to 4, wherein the storing the data associated with the first memory address from the first memory (202) to the second memory (204) includes detecting a request from the computing device (100) for moving the first memory address.

6. The method of any one of claims 1 to 5, wherein the notification identifies the first memory address stored from the first memory (202) to the second memory (204).

7. The method of any one of claims 1 to 6, wherein the action includes modification of an entry of a page table (110) in the computing device (100) associated with the first memory address for indicating absence of the data at the memory address of the first memory (202).

8. The method of any one of claims 1 to 7, wherein the action includes transmitting a prefetch request to move the data into the first memory address.

9. The method of any one of claims 1 to 8 further comprising:
monitoring a second access associated with a second memory address;
based on monitoring the second access, transmitting a request to the computing device (100) for moving second data into or out of the second memory address;
based on the request, receiving identification of a third memory address from the computing device (100); and
based on the identification of the third memory address, moving third data into or out of the third memory address identified by the computing device (100).

10. The method of any one of claims 1 to 8 further comprising:
monitoring a second access associated with a second memory address stored in the second memory (204);
determining that the second access is above the minimum threshold and below a maximum threshold;
based on determining that the second access is above the minimum threshold and below the maximum threshold, storing second data from the second memory address to the first memory (202).

11. A memory device coupled to a computing device (100), the memory device comprising:
a first memory (202) associated with a first tier of a memory hierarchy;
a second memory (204) associated with a second tier of the memory hierarchy, wherein the first tier and the second tier each correspond to a different access latency; and
a processor coupled to the first memory (202) and the second memory (204), wherein the processor is configured to execute instructions that cause the processor to perform the method according to any one of the preceding claims.
